# EUROPEAN PATENT SPECIFICATION

(11) **EP 0 826 296 B1**
(45) Date of publication and mention of the grant of the patent: **10.07.2002**
(21) Application number: 97202576.1
(22) Date of filing: 21.08.1997
(51) Int. Cl.: A01B 49/06, A01B 69/02, A01C 5/06

(54) **A machine combination**
Bestellkombination
Machine combinée

(30) Priority: 30.08.1996 NL 1003921
(43) Date of publication of application: 04.03.1998
(73) Proprietor: MAASLAND N.V., 3155 PD Maasland (NL)
(72) Inventor: Bom, Cornelis Johannes Gerardus, 3181 VC Rozenburg (NL); Brabander, Adrianus Petrus Maria, 2295 LL Kwintsheul (NL); Tollenaar, Eduard, 2905 VR Capelle A/D IJssel (NL)
(74) Representative: Corten, Maurice Jean F.M.

(56) References cited:
- EP-A- 0 340 539
- EP-A- 0 513 939
- EP-A- 0 629 337
- DE-A- 3 105 640
- DE-U- 9 411 571

## Description

The present invention relates to a machine combination as described in the introductory part of claim 1.

A machine combination including such an implement is known from the European patent application EP0340539. During operation, the weight of the seeding machine is bearing on the roller of the rotary harrow. The seeding machine is furthermore kept balanced via the quadrangle hinge construction. When the machine construction is put out of operation, the machine combination is lifted by means of the lifting hitch of the tractor. As a result of the free pivotability of the quadrangle hinge construction, first the rotary harrow is lifted and then, when the quadrangle hinge construction is limited in downward direction relative to the rotary harrow by the limiting element, the seeding machine is lifted as well. In known so-called floating constructions the roller remains on the ground by a pivoting movement about the shafts until the arm is limited in its downward movement by a stop. The arm of the roller and the seeding machine are interconnected by means of a strip pivotally connected to the seeding machine. The strip has a slotted hole orientated substantially vertically and transversely to the direction of travel. A supporting element rigidly connected to the arm is movable in this hole and functions as a stop. This has the disadvantage that the freedom of movement of the machine combination on the ground remains limited in many cases, especially because the lifting hitch of the tractor, because of the consecutive lifting movement of the seeding machine and the rotary harrow has approached the upper limit of its capability of deflecting. The arms of the roller are positioned near the ends of the transverse frame portion in which the gear wheels for the rotors of the rotary harrow are accommodated, this has the disadvantage that the frame portion is undesirably loaded by bending and torsion in respect of the trestle.

The present invention aims at obviating such drawbacks at least to some extent.

In accordance with the invention this is achieved by means of a construction as described in the characterizing part of claim 1. When lifting the seeding machine, the roller is immediately lifted together therewith. Because of this, there is obtained a great freedom of movement on the ground for the machine combination of the relevant type within the normal pivotal range of the lifting arms of a tractor, and the weight of the roller is absorbed for the greater part by the seeding machine. Due to this, the ends of the transverse frame of the rotary harrow is unloaded and the weight of the roller bears eventually for the greater part in the trestle of the rotary harrow, which trestle is appropriated thereto. Due to the presence of the slotted hole the rotary harrow preserves the capability of deflecting upwards when meeting with obstacles in the field. In the connection between the seeding machine and the roller a relative horizontal capability of movement is necessary because of the difference in the pivoting paths of the quadrangle hinge construction and the arms.

For a better understanding of the invention, reference will now be made to the accompanying drawings, in which:
Figure 1 shows, in side view, a machine combination according to the invention, in a condition in which it is coupled with the lifting hitch of a tractor;
Figure 2 is a view according to Figure 1 of an alternative embodiment of the machine combination according to the invention;
Figure 3 is a plan view according to the arrow VII of Figure 2;
Figure 4 is a view taken on the line VIII - VIII of Figure 3;
Figure 5 is a view according to Figure 3 of a further alternative construction, and
Figure 6 is a view according to Figure 3 of again another alternative construction.

Corresponding parts in the drawings have been indicated by the same reference numerals. The invention is by no means restricted to the embodiments shown and described here; they only serve to illustrate the inventive idea.

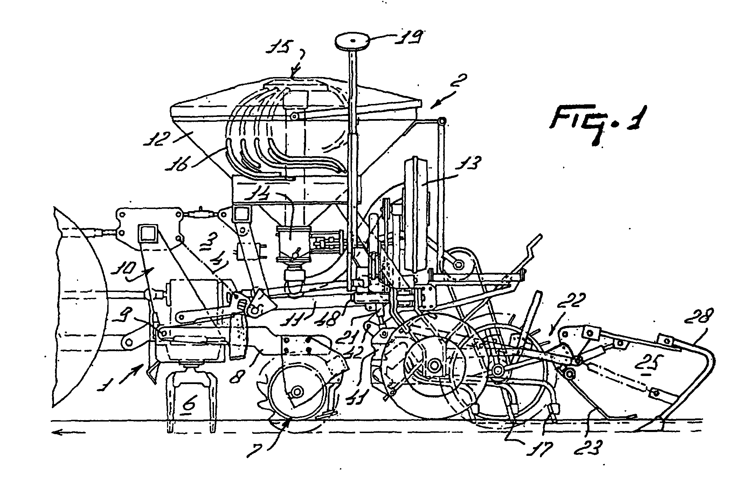

Figure 1 shows a combination of a rotary harrow 1 with a seeding machine 2, which machines are intercoupled via a construction which, in side view, is a quadrangle hinge construction whose downward movement is limited by means of a flexible limiting element 4, e.g. a chain, which is connected with the trestle of the rotary harrow. The rotary harrow 1 is provided with a roller 7, arranged behind working members 6, which roller 7 is pivotably connected, via arms 8, about a shaft extending horizontally and transversely to the direction of travel, with the frame of the rotary harrow.

The seeding machine comprises a frame 11 on which there are disposed a hopper 12 and an airpump 13 or a fan. Via a metering device 14, seed from the hopper 12 is supplied to an air current generated by the airpump 13 in a tube 10 and is passed to a distribution device 15 which, via flexible tubes 16 connected to a seed coulter 17, supplies the metered seed equally divided to the seed coulters 17. The seeding machine 2 is additionally provided with two marker members 19, each disposed at a side of the machine, for marking the next working pass of the seeding machine combination in the uncultivated field. Insofar as not otherwise mentioned in the present description, the machine combination corresponds to the non-prepublished European patent application 96 200 420 and can be judged in connection therewith in the present invention.

In the seeding machine 2 there is included, via an adjusting element 21, such as a hydraulic cylinder, a coverer device 22 having coverer elements 23 for covering furrows caused by seed coulters 17 and ridges of earth thrown up. The coverer elements 23 are coupled in groups to a horizontal carrier 24 extending over the working width, which carrier 24 is coupled via arms 40 to a main carrier 41 to which the seed coulters 17 are fastened. The seed coulters 17 and the coverer elements 23 are adjustable, pivotably about a pivot shaft 42, via the adjusting element 21 which acts on the main carrier 41, into and out of their operative position.

For adjusting the coverer elements 23 so as to make them more or less trailing, the carrier 24 is adjustable about a pivot shaft 44 relative to the arms 40 by means of an adjusting plate 43.

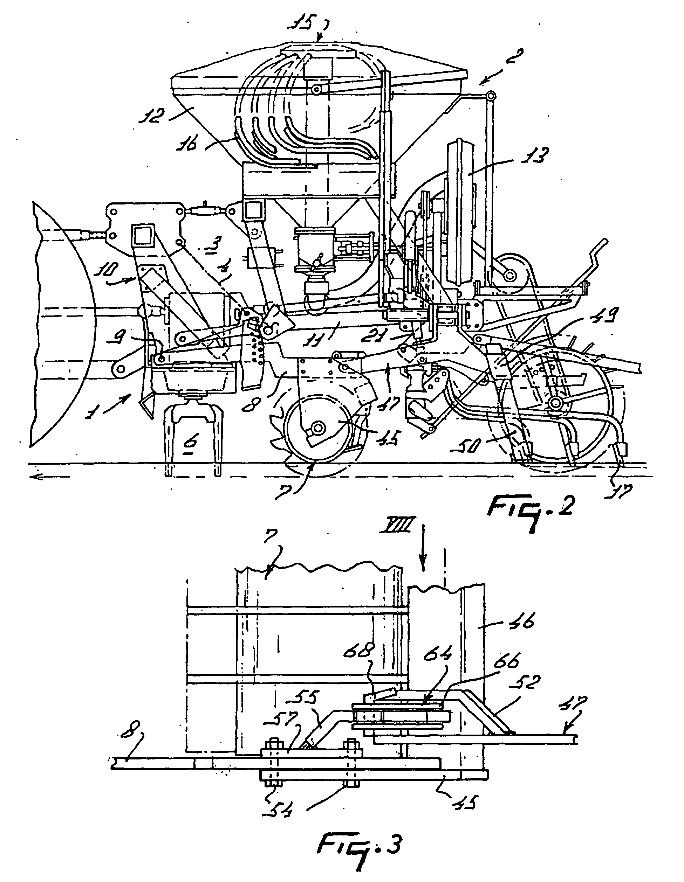

Figure 2 shows an embodiment of a machine combination in which the weight of the seeding machine 2 is supported by the roller 7 of the rotary harrow 1. To that end the seeding machine 2 is provided with a support 47 which is located at least almost in the imaginary space defined by an arm 8 and located substantially in the direction of travel, or is immediately adjacent thereto. In the embodiment shown, the arms 8 are disposed near the ends of the frame 11 of the rotary harrow 1 and the support 47 is coupled to a frame beam extending transversely over almost the entire width of the seeding machine. Near the end of this beam the support 47 is included in the seeding machine by means of the pivot shaft 48, which also constitutes the pivot shaft for the marker member 19, so as to be interchangeable with a supporting wheel and a wheel leg pertaining thereto. Such a supporting wheel construction is shown in Figure 1. The support 47 is locked against pivoting about the shaft 48 relative to the transverse frame beam by means of (non-shown) locking means with the aid of which the above-described supporting wheel can be adjusted into and out of a working position, respectively a transport position. In the present embodiment, the support 47 is provided near its rear end with a bushing 49 in which a leg 50 is adjustable, by means of a non-shown locking pin, into an inoperative position respectively a working position. Near the front side of the support 47 there is disposed a support element 51, such as a pin, extending horizontally and transversely to the direction of travel A. During operation, the support element 51 bears on a portion of the arm 8.

Such a supporting wheel construction is shown in Figure 1. The roller 7 is provided with a roller frame including a carrier 46 in the form of a quadrangle box girder on which scrapers for the roller 7 can be disposed, said carrier extending between two side pieces 45 disposed on the arms 8.

As shown in Figure 3, in the present embodiment, the supporting element 51 is included in a fork construction in which a lug 52 which, at least near its free end, extends substantially parallel to the support 47, is disposed against a plate-shaped portion of the support 47. The supporting element 51 extends between the support 47 and the lug 52. The frame 45, 46 of the roller 7 is provided with an arm portion 55, which is detachable via bolts 54, of which a supporting edge 56, intended for supporting the supporting element 51 at least in the operative position, extends substantially horizontally. A free end of the arm portion 55 extends, bent inwardly to some extent, parallel to an arm 8 and is provided with a flange element 57 via which the arm portion 55 is capable of being clamped to an arm 8. The arm portion 55 is additionally provided with a lifting edge, being a detachable one in the embodiment shown, by means of which the roller 7, when lifting the combination on the headland or for transport purposes, is lifted together with the seeding machine. In the present embodiment, the supporting element 51 is designed as a pin-shaped one and is fittingly disposed with normal clearance between the supporting edge 56 and the lifting edge 58.

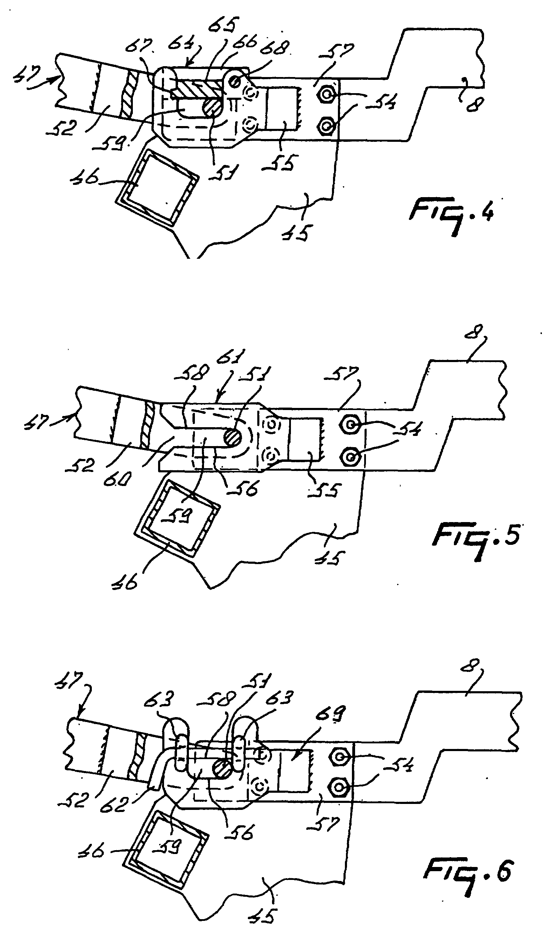

Figure 4 shows in a vertical cross section according to the line VIII - VIII in Figure 3 a view of the free end of the arm portion 55 in which there is provided a substantially U-shaped recess. Via an inserted block 65, constituting part of a closing element 64, there is created a slot-shaped opening 66 for the supporting element 51. The inserted block 65 corresponds in thickness to the local thickness of the arm portion 55 and is disposed immovably in lateral direction by means of vertical guide plates 66 disposed on both sides of the inserted block 65. Near its rear end the inserted block is provided with a protrusion 67, such as an edge, which is fittingly disposed in a recess intended for the purpose, which recess is provided in the rear upward edge of the U-shaped recess of the arm portion 55. The closing element 64, like the arm portion 55 near the front end of the slotted hole 66, is provided with a borehole via which the closing element 64 and the arm portion 55 are rigidly connected with each other by means of a pin 68.

In a view taken on the line VIII - VIII in Figure 3, Figure 5 shows an alternative connecting construction between the roller and the seeding machine. In this construction the free end of an arm portion 61 comprises a slotted hole 60, which is open in rearward direction and which is provided in the arm portion 61 consisting of an integral whole.

Figure 6 also shows, in a view taken on the line VIII - VIII in Figure 3, a second alternative construction including an arm portion 69 provided with a U-shaped recess, the basis of which being constituted by the supporting edge 56 and the lifting edge 58 being constituted by a pin 62 which is passed through eyes 63 fitted to the arm portion 69.

The function of the construction shown in Figures 2 to 6 is as follows. During operation, the weight of the seeding machine 2 is supported substantially on the roller 7 via the supporting element 51. The seeding machine is furthermore kept balanced via the quadrangle hinge construction 3. When turning the machine combination on the headland, the machine combination is lifted by means of the lifting hitch of the tractor. As a result of the free pivotability of the quadrangle hinge construction 3, first the rotary harrow is lifted and then, when the quadrangle hinge construction 3 is limited in downward direction relative to the rotary harrow by the limiting element 4, the seeding machine 2 is lifted as well. In known so-called "floating" constructions, the roller 7 remains on the ground by a pivoting movement about the shaft 9 until the arm 8 is limited in its downward movement by a stop. This has the disadvantage that the freedom of movement of the machine combination on the ground remains limited in many cases, especially because the lifting hitch of the tractor, because of the consecutive lifting movement of the seeding machine and the rotary harrow, has approached the upper limit of its capability of deflecting. With machines in which, for constructive reasons, the arms of the roller are positioned near the ends of the transverse frame portion in which the gear wheels for the rotors 6 are accommodated, this has the disadvantage that the frame portion is undesirably loaded by bending and torsion in respect of the trestle 10. The present invention obviates such drawbacks by the presence of a slotted hole in which a supporting element is fittingly disposed with normal clearance so that, when lifting the seeding machine, the roller 7 is immediately lifted together therewith. Because of this, there is obtained a great freedom of movement on the ground for machine combinations of the relevant type within the normal pivotal range of the lifting arms of a tractor, and the weight of the roller 7 is absorbed for the greater part by the seeding machine 2. Due to this, the ends of the transverse frame of the rotary harrow is unloaded and the weight of the roller 7 bears eventually for the greater part in the trestle 10 of the rotary harrow, which trestle 10 is appropriated thereto. Due to the presence of the slotted hole 59, 60 the rotary harrow preserves the capability of deflecting upwards when meeting with obstacles in the field. In the connection between the seeding machine and the roller a relative horizontal capability of movement is necessary because of the difference in the pivoting paths of the quadrangle hinge construction 3 and the arms 8.

In a favourable embodiment, the lifting edge, i.e. the upper edge of the slot edge, is detachably included in the construction. In accordance with the invention, it is possible that the rear side or the front side of the slotted hole is open. Such an embodiment has the advantage that coupling of the two machines can take place in a simpler manner. It is preferred that the arm portion 55, 61, 69, which is provided with a slotted hole, or the supporting element 51 is detachably coupled with an arm 8 or with the frame of the seeding machine. This has the advantage that conversion afterwards and conversion of existing machines can be carried out in a simple manner. Furthermore, the elements mentioned are preferably produced so as to be connectable, independently of the roller frame 45, 46, to the arms 8 for the roller. This has the advantage that the distance from the roller to the seeding machine can be varied, while the connecting construction between roller and seeding machine has a fixed position relative to the two machines.

## Claims

1. A machine combination, including a rotary harrow (1) and a seeding machine (2), the weight of the seeding machine (2) bearing on the roller (7) of the rotary harrow during operation, which roller (7) via arms (8) orientated in the direction of travel (A) is connected, pivotably about pivot shafts (9) which are disposed horizontally and transversely, with a frame portion of the rotary harrow (1), which seeding machine (2), via a construction which, in side view, is a quadrangle hinge construction (3) by means of pivot shafts which are also disposed horizontally and transversely, is coupled with the trestle (10) of the rotary harrow, the downward freedom of movement of said quadrangle hinge construction (3) being limited by means of a flexible limiting element (4) disposed between the trestle (10) and the quadrangle hinge construction (3), said roller (7) and said seeding machine (2) are interconnected by means of a slotted hole construction (55-69) which is included in one of the two machines (1, 2) and a supporting element (51), which extends substantially transversely to the direction of travel (A) and which, movably in the slotted hole (59, 60), is included in the other machine, **characterized in that** the slotted hole (59, 60) is orientated substantially horizontally and in the direction of travel (A).

2. A machine combination as claimed in claim 1, **characterized in that** the slotted hole (59, 60) is created by means of a detachable construction element (62, 64) constituting the upper edge of the slotted hole (59, 60).

3. A machine combination as claimed in claim 1 or 2, **characterized in that** the slotted hole (59, 60) is included in a plate-like or strip-like construction element (55, 60, 69) which is mounted on an arm (8).

4. A machine combination as claimed in claim 1, 2 or 3, **characterized in that** the slotted hole (59, 60) has a closed boundary both at its front end and its rear end.

5. A machine combination as claimed in any one of the preceding claims, **characterized in that** a closing element (64) can be disposed in a recess in the upright boundary wall of the slotted hole (59, 60) at one end thereof.

6. A machine combination as claimed in any one of the preceding claims, **characterized in that** the closing element (64) comprises an inserted block (65) which is enclosed by two plate elements (66) which are longer than the length of the slotted hole (59, 60) and which, at least locally, have a mutual distance corresponding to the thickness of the construction element in which the slotted hole (59, 60) is disposed.

7. A machine combination as claimed in any one of the preceding claims, **characterized in that** the supporting element (51) has a substantially rounded off shape near its lower side and preferably has a pin-like shape.

8. A machine combination as claimed in any one of the preceding claims, **characterized in that** the supporting element (51) is supported at two longitudinal ends, e.g. by means of a fork construction (47, 52).

9. A machine combination as claimed in any one of the preceding claims, **characterized in that** the supporting element (51) is included in a support (47) which is interchangeable with a supporting wheel.

10. A machine combination as claimed in any one of the preceding claims, **characterized in that** the support (47) is provided near its rear side with a leg (50) which is capable of being moved upwardly or being taken away during operation.

## Patentansprüche

1. Maschinenkombination mit einer Kreiselegge (1) und einer Sämaschine (2), wobei das Gewicht der Sämaschine (2) im Betrieb auf der Walze (7) der Kreiselegge lastet, wobei die Walze (7) über sich in Arbeitsrichtung (A) erstreckende Arme (8) um horizontal und quer angeordnete Schwenkachsen (9) schwenkbar mit einem Rahmenteil der Kreiselegge (1) verbunden ist, wobei die Sämaschine (2) über eine Konstruktion, die in Seitenansicht eine Viergelenk-Schwenkvorrichtung (3) ist, mittels ebenfalls horizontal und quer angeordneter Schwenkachsen mit dem Anbaubock (10) der Kreiselegge verbunden ist, wobei die Bewegungsfreiheit der Viergelenk-Schwenkvorrichtung (3) nach unten durch ein flexibles Begrenzungselement (4) begrenzt ist, das zwischen dem Anbaubock (10) und der Viergelenk-Schwenkvorrichtung (3) angeordnet ist, wobei die Walze (7) und die Sämaschine (2) miteinander durch eine Schlitzkonstruktion (55 bis 69) in einer der beiden Maschinen (1, 2) und ein Stützelement (51) verbunden sind, das sich im wesentlichen quer zur Arbeitsrichtung (A) erstreckt und in der schlitzförmigen Öffnung (59, 60) bewegbar in der anderen Maschine vorhanden ist,
**dadurch gekennzeichnet, daß** die schlitzförmige Öffnung (59, 60) im wesentlichen horizontal und in Arbeitsrichtung (A) ausgerichtet ist.

2. Maschinenkombination nach Anspruch 1,
**dadurch gekennzeichnet, daß** die schlitzförmige Öffnung (59, 60) durch ein lösbares Bauelement (62, 64) gebildet ist, das den oberen Rand der schlitzförmigen Öffnung (59, 60) bildet.

3. Maschinenkombination nach Anspruch 1 oder 2,
**dadurch gekennzeichnet, daß** die schlitzförmige Öffnung (59, 60) in einem plattenartigen oder flachteilartigen Bauelement (55, 60, 69) ausgebildet ist, das an einem Arm (8) angebracht ist.

4. Maschinenkombination nach Anspruch 1, 2 oder 3,
**dadurch gekennzeichnet, daß** die schlitzförmige Öffnung (59, 60) sowohl an ihrem vorderen als auch an ihrem hinteren Ende eine geschlossene Begrenzung aufweist.

5. Maschinenkombination nach einem der vorhergehenden Ansprüche,
**dadurch gekennzeichnet, daß** ein Verschlußelement (64) in einer Ausnehmung in der aufrechten Begrenzungswand der schlitzförmigen Öffnung (59, 60) an einem Ende derselben angeordnet sein kann.

6. Maschinenkombination nach einem der vorhergehenden Ansprüche,
**dadurch gekennzeichnet, daß** das Verschlußelement (64) einen eingesetzten Block (65) umfaßt, der von zwei Plattenelementen (66) umschlossen ist, die länger sind als die schlitzförmige Öffnung (59, 60) und zumindest lokal einen Abstand zueinander haben, der der Dicke des Bauelementes entspricht, in dem die schlitzförmige Öffnung (59, 60) ausgebildet ist.

7. Maschinenkombination nach einem der vorhergehenden Ansprüche,
**dadurch gekennzeichnet, daß** das Stützelement (51) nahe ihrer unteren Seite eine im wesentlichen abgerundete Form und vorzugsweise eine stiftartige Form aufweist.

8. Maschinenkombination nach einem der vorhergehenden Ansprüche,
**dadurch gekennzeichnet, daß** das Stützelement (51) an zwei in Längsrichtung liegenden Enden z. B. mittels einer Gabelkonstruktion (47, 52) abgestützt ist.

9. Maschinenkombination nach einem der vorhergehenden Ansprüche,
**dadurch gekennzeichnet, daß** das Stützelement (51) in einer Stütze (47) angeordnet ist, die gegen ein Stützrad austauschbar ist.

10. Maschinenkombination nach einem der vorhergehenden Ansprüche,
**dadurch gekennzeichnet, daß** die Stütze (47) nahe ihrer Rückseite mit einem Bein (50) versehen ist, das im Betrieb nach oben bewegbar oder abnehmbar ist.

## Revendications

1. Machine combinée, comprenant une herse rotative (1) et une égreneuse (2), le poids de l'égreneuse (2) pesant sur le rouleau (7) de la herse rotative lors du fonctionnement, lequel rouleau (7), par l'intermédiaire de bras (8) orientés dans le sens de déplacement (A), est relié de manière pivotante autour d'arbres formant pivots (9) qui sont disposés de manière horizontale et transversale, avec une partie formant châssis de la herse rotative (1), laquelle égreneuse (2), par l'intermédiaire d'une structure qui, selon une vue latérale, est une structure formant charnière en quadrilatère (3) au moyen d'arbres formant pivots qui sont également disposés de manière horizontale et transversale, est couplée à la fourche de soutien (10) de la herse rotative, la liberté de mouvement vers le bas de ladite structure formant charnière en quadrilatère (3) étant limitée au moyen d'un élément de limitation flexible (4) disposé entre la fourche de soutien (10) et la structure formant charnière en quadrilatère (3), ledit rouleau (7) et ladite égreneuse (2) sont reliés entre eux au moyen d'une structure formant trou entaillé (55-69) qui est comprise dans l'une des deux machines (1, 2) et un élément de support (51), qui s'étend de manière sensiblement transversale par rapport au sens de déplacement (A) et qui, de manière mobile dans le trou entaillé (59, 60), est comprise dans l'autre machine, **caractérisée en ce que** le trou entaillé (59, 60) est orienté de manière sensiblement horizontale et dans le sens de déplacement (A).

2. Machine combinée selon la revendication 1, **caractérisée en ce que** le trou entaillé (59, 60) est créé au moyen d'un élément de structure détachable (62, 64) constituant le bord supérieur du trou entaillé (59, 60).

3. Machine combinée selon la revendication 1 ou 2, **caractérisée en ce que** le trou entaillé (59, 60) est compris dans un élément de structure en forme de plaque ou en forme de bande (55, 60, 69) qui est monté sur un bras (8).

4. Machine combinée selon la revendication 1, 2 ou 3, **caractérisée en ce que** le trou entaillé (59, 60) a une limite fermée à la fois au niveau de son extrémité avant et de son extrémité arrière.

5. Machine combinée selon l'une quelconque des revendications précédentes, **caractérisée en ce qu'**un élément de fermeture (64) peut être disposé dans une cavité dans la paroi limite verticale du trou entaillé (59, 60) au niveau d'une extrémité de celle-ci.

6. Machine combinée selon l'une quelconque des revendications précédentes, **caractérisée en ce que** l'élément de fermeture (64) comprend un bloc inséré (65) qui est renfermé par deux éléments formant plaques (66) qui sont plus longs que la longueur du trou entaillé (59, 60) et qui, au moins localement, ont une distance de séparation correspondant à l'épaisseur de l'élément de structure dans lequel le trou entaillé (59, 60) est disposé.

7. Machine combinée selon l'une quelconque des revendications précédentes, **caractérisée en ce que** l'élément de support (51) présente une forme sensiblement arrondie à proximité de son côté inférieur et de préférence une forme ressemblant à une broche.

8. Machine combinée selon l'une quelconque des revendications précédentes, **caractérisée en ce que** l'élément de support (51) est supporté au niveau de deux extrémités longitudinales, par exemple au moyen d'une structure en fourche (47, 52).

9. Machine combinée selon l'une quelconque des revendications précédentes, **caractérisée en ce que** l'élément de support (51) est compris dans un support (47) qui est interchangeable avec une roue de support.

10. Machine combinée selon l'une quelconque des revendications précédentes, **caractérisée en ce que** le support (47) est doté à proximité de son côté arrière d'une jambe (50) qui peut être déplacée vers le haut ou être retirée lors du fonctionnement.
